# EUROPEAN PATENT SPECIFICATION

(11) **EP 2 214 376 B1**
(45) Date of publication and mention of the grant of the patent: **12.11.2014**
(21) Application number: 08800789.3
(22) Date of filing: 05.09.2008
(51) Int. Cl.: H04L 29/06

(54) **MANAGEMENT METHOD, SYSTEM AND APPARATUS FOR SPECIFIC APPARATUS IN MULTIMEDIA SESSION**
VERWALTUNGSVERFAHREN, SYSTEM UND VORRICHTUNG FÜR SPEZIFISCHE VORRICHTUNGEN IN EINER MULTIMEDIA-SITZUNG
PROCÉDÉ, SYSTÈME ET APPAREIL DE GESTION POUR UN APPAREIL SPÉCIFIQUE DANS UNE SESSION MULTIMÉDIA

(30) Priority: 12.09.2007 CN 200710145447; 30.11.2007 CN 200710194682
(43) Date of publication of application: 04.08.2010
(73) Proprietor: Huawei Technologies Co., Ltd., Longgang District, Shenzhen Guangdong 518129 (CN)
(72) Inventor: ZHU, Lei, Shenzhen Guangdong 518129 (CN)
(74) Representative: Thun, Clemens
(86) International application number: PCT/CN2008/072277
(87) International publication number: WO 2009/033412

(56) References cited:
- WO-A-2007/073602
- WO-A1-2006/118397
- CN-A- 1 949 709
- CN-A- 101 072 319
- US-A1- 2005 060 411
- "Digital cellular telecommunications system (Phase 2+); Universal Mobile Telecommunications System (UMTS); IP Multimedia (IM) session handling; IM call model; Stage 2 (3GPP TS 23.218 version 7.6.0 Release 7); ETSI TS 123 218" ETSI STANDARDS, LIS, SOPHIA ANTIPOLIS CEDEX, FRANCE, vol. 3-CN1, no. V7.6.0, 1 June 2007 (2007-06-01), pages 1-61, XP014037754 ISSN: 0000-0001
- CHO Y H ET AL: "Policy-Based Distributed Management Architecture for Large-Scale Enterprise Conferencing Service Using SIP" IEEE JOURNAL ON SELECTED AREAS IN COMMUNICATIONS, IEEE SERVICE CENTER, PISCATAWAY, US, vol. 23, no. 10, 1 October 2005 (2005-10-01), pages 1934-1949, XP011140061 ISSN: 0733-8716
- ROSENBERG CISCO SYSTEMS J: "A Framework for Conferencing with the Session Initiation Protocol (SIP); rfc4353.txt" IETF STANDARD, INTERNET ENGINEERING TASK FORCE, IETF, CH, 1 February 2006 (2006-02-01), pages 1-29, XP015044786 ISSN: 0000-0003
- "Push to Talk over Cellular 2 Requirements" 3GPP DRAFT; OMA-RD-POC-V2_0-20060820-D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Fairfax, VA, USA; 20060820, 20 August 2006 (2006-08-20), pages 1-95, XP050304417 [retrieved on 2006-08-20]
- BURGER SNOWSHORE NETWORKS E ET AL: "Directed Transcoding draft-burger-sipping-dir-transcode-00; draft-burger-sipping-dir-transcode-00.txt" IETF STANDARD-WORKING-DRAFT, INTERNET ENGINEERING TASK FORCE, IETF, CH, 24 February 2003 (2003-02-24), pages 1-17, XP015000402 ISSN: 0000-0004

## Description

### FIELD OF THE TECHNOLOGY

The present invention relates to a communication technology field, and more particularly to a method, system and device for managing a specific device in a multimedia session.

### BACKGROUND

Among the applications based upon IP Multimedia Subsystem (IMS) or Session Initiation Protocol (SIP), the multi-party communication concept has been widely used, especially in the field of multimedia session. The SIP-based multi-party multimedia session supports a multimedia application of joining many clients in one session.

The typical services of the SIP-based multi-party multimedia session include Open Mobile Alliance Push to talk over Cellular (OMA PoC), OMA Instant Message (OMA IM), OMA Converged IP Messaging (OMA CPM), etc.

The inventor(s) of the present invention has found that, along with the introduction and wide expansion of multimedia services, specific devices for assisting the implementation of sessions, such as media storage and transmission servers, Interactive Voice Response (IVR), and third-party servers, will be gradually brought in the multimedia session from now on. The specific devices have distinctive functions different from those clients participating in the session, and always provide auxiliary functions to a certain extent.

For example, in the PoC service, a media server may exist in the session, which offers some media to the participant clients in the session to serve as an auxiliary means in the PoC session. Definitely, in other multimedia sessions, auxiliary devices with functions similar to the media server may also be provided in the session. These media servers are not common clients, and generally have distinct working manners different from common participants in the session.
"Digital cellular telecommunications system (phase 2+); Universal Mobile telecommunications System (UMTS); IP Multimedia (IM) session handling; IM call model; Stage 2" ETSI TS 123 218 discloses examples using MRFC for announcement, conferencing and transcoding.

US 2005/060411 A1 discloses a system and method that proxy servers to receive capability and preference information concerning user agents desiring to establish a media session.

IEEE JOURNAL ON SELECTED AREA IN COMMUNICATIONS discloses Policy-Based distributed management architecture for large-scale enterprise conferencing service using SIP.

Finally, WO 2007/073602 A1 discloses a method and a system for establishing a multi-user communication session between terminals with incompatible media characteristics in which users with terminals having incompatible media characteristics are invited to participate in the communication session. A transcoding session is set up for enabling transcoding between the incompatible media characteristics of the terminals based on information about the terminals of the users having accepted the invitation.

### SUMMARY

Various embodiments of the present invention provide a method, system, and device for managing a specific device in a multimedia session, so as to control and manage the specific device during the process of establishing the multimedia session or sending media.

In view of the above, a method provided by one embodiment of the present invention for joining a specific device in a multimedia session, includes the following steps.

A server determines whether the specific device is required to join in the multimedia session or not, the specific device is for assisting the implementation of the multimedia session, wherein the step of determining comprises: querying a policy server for the joining policy of the specific device to join in the session..

The server sends a request message to the specific device in response to the specific device which is required to join in.

The server joins the specific device in the multimedia session in response to a response received from the specific device.

The server obtains services offered by the specific device through an interface between the specific device and the server; the interface performs communications through an RTSP protocol, an HTTP protocol or an FTP protocol.

A system provided by one embodiment of the present invention for managing a specific device in a multimedia session includes:
a server adapted to send a request message to the specific device when determining that the specific device is required to join in the multimedia session, and join the specific device in the multimedia session when receiving a response from the specific device.

A server provided by one embodiment of the present invention in a multimedia session includes a determination module and a transceiver module.

The determination module is adapted to send a request message to a specific device through the transceiver module when determining that the specific device is required to join in the multimedia session, the specific device is for assisting the implementation of the multimedia session, and join the specific device in the multimedia session when the transceiver module receives a response returned by the specific device, and obtain services offered by the specific device through an interface between the specific device and the server; wherein the interface performs communications through an RTSP protocol, an HTTP protocol or an FTP protocol. The server is adapted to determine whether the specific device is required to join in the multimedia session by querying a policy server for the joining policy of the specific device to join in the session.

A server provided by one embodiment of the present invention in a multimedia session includes:
a determination module, adapted to determine whether a specific device is required to join in or leave the multimedia session.
a request sending module, adapted to send a notify message to the specific device when the determination module determines the specific device is required to join in or leave the multimedia session.
an authorization module, adapted to authorize a terminal device joining in the multimedia session.

### BRIEF DESCRIPTION OF THE DRAWINGS

FIG. 1 is a flow chart of a method for managing a specific device in a multimedia session;
FIG. 2 is a flow chart of a process for working out session types in a multimedia session;
FIG. 3 is a flow chart of a process for joining a media server in a PoC session in a session-establishment stage;
FIG. 4 is a flow chart of a process for joining a media server in a multimedia conference according to a session type in a chat room scenario;
FIG. 5 is a flow chart of a process for joining a media server in a multimedia session based upon a preset policy according to the present invention;
FIG. 6 is a flow chart of a process for a media server to obtain a media transmission right when joining in a multimedia session;
FIG. 7 is a flow chart of a process for a server to notify every client when a media server is removed from a session;
FIG. 8 is a schematic structural view of a system for managing a specific device in a multimedia session according to an embodiment of the present invention;
FIG. 9 is a flow chart of a method for managing a specific device in a multimedia session; and
FIG. 10 is a flow chart of a method for managing a specific device in a multimedia session.

### DETAILED DESCRIPTION OF THE EMBODIMENTS

Through analysis, it is known that, a specific device needs to be particularly processed and controlled, when entering a multi-party multimedia session. During the session establishment and session negotiation processes, the normal usage of the specific device may be guaranteed. However, no methods for dealing with such a problem have been proposed in the prior art. Accordingly, the present invention provides the following solutions directed to the above problem.

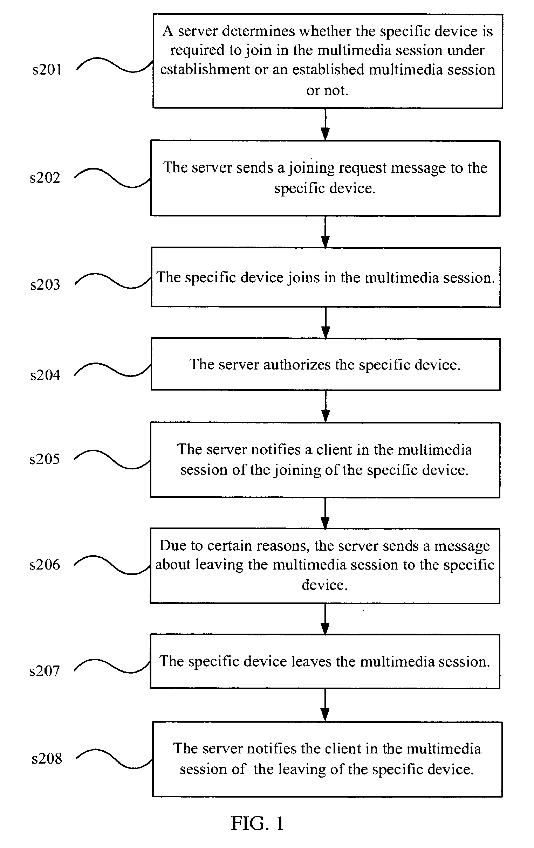

As an example, FIG. 1 shows a method for managing a specific device in a multimedia session, which includes:

Block s201: A server determines whether the specific device is required to join in the multimedia session under establishment or an established multimedia session or not.

In the following circumstances, the server may determine whether the specific device is required to join in the multimedia session under establishment or an established multimedia session or not according to the following factors: (1) making determination based upon a request sent by a client; (2) making determination based upon service parameters used in the multimedia session; (3) making determination based upon an attribute or type of the multimedia session; or (4) making determination based upon a policy preset at a network. During signaling processing, the manner such as a URI parameter, a feature tag and formulating by a calling party may be adopted to indicate the specific device to join in a session.

Block s202: The server sends a joining request message to the specific device.

Block s203: The specific device joins in the multimedia session.

Block s204: The server authorizes the specific device.

In the multimedia session, the specific device has specific service functions, e.g., the media server has functions of providing media to a third party after the session begins or sending media to a client that requests to send media. Therefore, in accordance with the service logic or policy of the multimedia session, the specific device that joins in the multimedia session needs to be authorized, e.g., the media server is granted with a media transmission right.

Particularly, when the specific device joins in a multimedia session during an establishment stage of the multimedia session, the specific device is firstly authorized. Because the specific device may join in the session during the session, the specific device joining in the session after the session begins is authorized in a high priority.

Block s205: The server notifies one or more clients in the multimedia session of the joining of the specific device.

The notification process is achieved in the following manners. (1) The server modifies status information of the multimedia session to identify the joining of the specific device, and notifies the client(s) in the multimedia session of the status information. Alternatively, (2) the server identifies the joining of the specific device in multimedia session participant information, or stores the status information of the specific device in relevant information of the multimedia session for the client in the multimedia session to get to know the joining of the specific device through information query mechanism. Alternatively, (3) the server stores the status information of the specific device in the relevant information of the multimedia session, and notifies a client that subscribes the relevant information of the multimedia session of the joining of the specific device. Alternatively, (4) the server declares the status information of the specific device.

Block s206: Due to certain reasons, the server sends a message about leaving the multimedia session to the specific device.

The reasons for leaving the multimedia session include the following circumstances. The server receives a request for leaving the multimedia session sent by the specific device. Alternatively, the server initiates a process of removing the specific device from the multimedia session. Alternatively, the server receives a request for removing the specific device from the multimedia session sent by the client in the multimedia session.

Block s207: The specific device leaves the multimedia session.

Block s208: The server notifies the client(s) in the multimedia session of the leaving of the specific device.

The manner for notifying the leaving of the specific device may be obtained with reference to the manner for notifying every client that the specific device has joined in the multimedia session in Block s205.

Hereinafter, the standards for the server to determine whether the specific device is required to join in a multimedia session under establishment or an established multimedia session or not in Block s201 will be described below in detail.

### (1) Making determination based upon the request sent by the client

In the establishment stage of the multimedia session, a calling client generally can decide whether the established multimedia session needs a specific device (e.g., a media server) or not, so the calling client can add a parameter relevant to the specific device in a session initiation request message to indicate that the established multimedia session needs the media server to join in. During the multimedia session, the client may also send a request for joining the specific device in the multimedia session. The request carries the parameter relevant to the specific device to indicate that the multimedia session needs the specific device to join in.

For example, in the PoC session establishment scenario, a PoC client that initiates the session indicates partial attributes of the established session, such as a type of the session, in an INVITE request message. The session types in the existing OMA PoC service include 1-1 PoC session, pre-established group session, Ad Hoc PoC session, Chat Group PoC session, and 1-many-1 PoC session, etc. These session types may be identified by specific URI parameters. When the specific device is required to join in the session, a specific session type parameter may be adapted to indicate the need for joining in the session. For example, the PoC client that initiates the session may add a parameter about joining the media server in the PoC session, such as MediaSession, to the URI parameters, so as to indicate that the media server needs to join in the session. This manner may also be used when the specific device is required to join in the session after the session begins.

Considering the placement of the URI parameters in the SIP message, the URI parameter of the specific device may be indicated according to the corresponding usage form in the IETF RFC3261, which is, for example, shown as follows.

```
        Request sip:SIPUser@.networkA.net;
    -URI parameter name=parameter-value
```

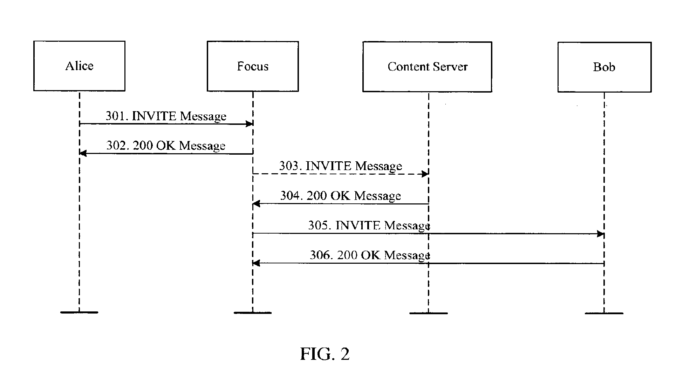

An example of a message head of an SIP request message may be obtained with reference to the descriptions of FIG. 2.

During this process, an expanded URI parameter is included, for example, Conference type. The Parameter name is conference. The optional value may be a type of the conference, such as media content session (Content Server), or IVR (IVR Server), including types of specific devices that may join in the Conference.

In the process 1, Alice calls a multimedia conference control center, in which a URI Parameter carrying a conference type indicates that the media server needs to join in the conference. The details about parameters and procedures for achieving the joining motion are described as follows.

s301: Alice sends an INVITE message to the multimedia conference control center (Focus).

The content of the message is expressed as follows.

```
        F1 INVITE Alice -> Conference focus X
        INVITE sip:focusX@confernce.serviceprovider.net SIP/2.0; conference= contentserver
        To: sip: focusX@confernce.serviceprovider.net
        From: Alice <sip:alice@atlanta.com>;tag= 1928301774
        Call-ID: a84b4c76e66710
        CSeq: 314159 INVITE
        Contact: <sip:alice@pc33.atlanta.com>
        Content-Type: application/sdp
        Content-Length: 142
```

s302: The multimedia conference control center (Focus) returns a 200 OK message to Alice.

The content of the message is expressed as follows.

```
         F2 200 OK Conference focus X -> Alice
         SIP/2.0 200 OK
         To: SIP:Alice <sip:alice@atlanta.com>;tag=1928301774
         From: focusX@confernce.serviceprovider.net
         Call-ID: a84b4c76e66710
         CSeq: 314159 INVITE
         Contact: focusX@confernce.serviceprovider.net; conference=contentserver
         Content-Type: application/sdp
         Content-Length: 131
```

s303: The multimedia conference control center (Focus) sends the INVITE message to the media server.

The content of the message is expressed as follows.

```
         F3 INVITE Conference Focus X-> Content Server X
         INVITE sip:bob@ 192.0.2.4 SIP/2.0
         To: sip:contentserverX@conference.serviceprovider.net
         From: focusX@confernce.serviceprovider.net;tag=1928301775
         Call-ID: a84b4c76e66711
         CSeq: 314160 INVITE
         Contact: <sip: alice@pc33.atlanta.com>
         Content-Type: application/sdp
```

Content-Length: 142

s304: The media server returns the 200 OK message to the multimedia conference control center (Focus).

The content of the message is expressed as follows.

```
         F4 200 OK Content Server X -> Conference Focus X
         SIP/2.0 200 OK
         To: sip:contentserverX@conference.serviceprovider.net
         From: focusX@confernce.serviceprovider.net
         Call-ID: a84b4c76e66710
         CSeq: 314160 INVITE
         Content-Type: application/sdp
         Content-Length: 131
```

s305: The multimedia conference control center (Focus) sends the INVITE message to Bob.

The content of the message is expressed as follows.

```
         F5 INVITE Conference Focus X -> Bob
         INVITE sip:bob@ 192.0.2.4 SIP/2.0; conference=contentserver
         To: Bob <sip:bob@biloxi.com>
         From: focusX@confernce.serviceprovider.net
         Call-ID: a84b4c76e66712
         CSeq: 314161 INVITE
         Content-Type: application/sdp
         Content-Length: 142
```

s306: Bob returns the 200 OK message to the multimedia conference control center (Focus).

The content of the message is expressed as follows.

```
         F6 200 OK Bob -> biloxi.com proxy
         SIP/2.0 200 OK
         To: Bob <sip:bob@biloxi.com>;tag=a6c85cf
         From: focusX@confernce.serviceprovider.net
         Call-ID: a84b4c76e66712
         CSeq: 314161 INVITE
         Contact: sip:bob@ 192.0.2.4; conference=contentserver
         Content-Type: application/sdp
         Content-Length: 131
```

### (2) Making determination based upon service parameters used in the multimedia session

In the multimedia session, the media server or other specific device when joining in the session (no matter in the establishment stage or during the implementation of the session) needs the support of a physical device having service capabilities on the network. During the session negotiation, the device having certain service capabilities may be specified by a certain parameter, such as a media parameter in session description protocol (SDP) parameters. The media parameter includes a media type and an encoding format. Therefore, the SDP parameter of the specific device may be specified in the SDP parameter of the message body, so as to instruct the network entity that opens and parses the SDP parameter to send a session negotiation request to the specific device.

The IETF RFC4796 has introduced the details about adding a Content value to the media parameter in the SDP parameters, so as to indicate the applications and attributes of the media stream.

The examples in the following paragraphs of the specification of present invention introduce using requirements of the media server in the session in a similar manner as that for explaining the applications of the media parameter in the RFC4796. In practical application, the specific device may also be identified in the SDP parameters through expanding the media parameter or adding the SDP parameters of the specific device.

The following example aims at demonstrating an SDP parameter identification manner with a Content attribute added in the SDP parameter. The slides indicate slides for being projected. The Speaker indicates voice. The present invention expands the existing Content attribute, which may be, for example, media server. According to the following descriptions of the content attribute, m=video 53334 RTP/AVP 31 indicates media for being sent to participants, and this media stream establishes a connection with the content server.

```
         v=0
         o=Alice 292742730 29277831 IN IP4 131.163.72.4
         s=Second lecture from information technology
         c=IN IP4 131.1.64.74.2
         t=0 0
         m=video 52886 RTP/AVP 31
         a=rtpmap:31 H261/9000
         a=contentalides
        m=video 53334 RTP/AVP 31
         a=rtpmap:31 H261/9000
         a=content:speaker
         a=content:contentServer
         m=video 54132 RTP/AVP 31
         a=rtpmap:31 H261/9000
         a=content:sl
```

Here is another expression manner.

```
         v=0
         o=Alice 292742730 29277831 IN IP4 131.163.72.4
         s=Second lecture from information technology
         c=IN IP4 131.164.74.2
         t=0 0
         m=video 52886 RTP/AVP 31
         a=rtpmap:31 H261/9000
         a=content:slides
         m=video 53334 RTP/AVP 31
         a=rtpmap:31 H261/9000
         a=content: speaker: contentServer
         m=video 54132 RTP/AVP 31
         a=rtpmap:31 H261/9000
         a=content:sl
```

### (3) Making determination based upon the attribute or type of the multimedia session

Under some circumstances, the attribute or type of the session and the attribute of the session where the specific device of the multi-party session joins in is determined by some parameters of the network. For example, a session application server for serving subscribers is bound with a media server, so as to establish a session service together for users. The typical service may be a group chat session service. In such a scenario, the address of the application server for providing the specific service may be published.

Particularly, the function of the session determines the attribute of the session, such as chat room, scheduling session, and conference. Taking the conference as an example, the attribute of the session essentially requires IVR or recorder as the specific device, so that the IVR or the recorder may join in the session.

### (4) Making determination based upon the policy preset at the network.

It is determined whether the session is established with a specific device or not according to the policy preset at the network. For example, an XML document management server (XDMS) for saving group information may save attributes of the group session. The group session may determine an attribute of a session to be established according to the attribute information of the group saved in the group server. For example, the group session with the media server joining in may add the group attributes of MediaServer, and the group session with the IVR joining in may add the group attribute of IVRServer.

In the following examples, the scenario that the client uses the OMA PoC service is taken as an example for illustrating the method for managing the specific device in the multimedia session in detail. In this scenario, the specific device is a media server.

In the application of the multimedia session service such as OMA PoC service, the situation that the media server serving as a specific device joins in the session may occur in the establishment stag e of the multi-party session or during the implementation of the multi-party session. The joining of the media server in the session during the establishment stage may also be taken as a necessary condition for determining the existence of the session. For example, a parameter about whether the media server is required or not is clearly specified in the message, and if the media server cannot join in the session, the session cannot be normally established.

According to another example, a method for joining the media server in the PoC session during the establishment stage is described, as shown in FIG. 2, includes the following steps.

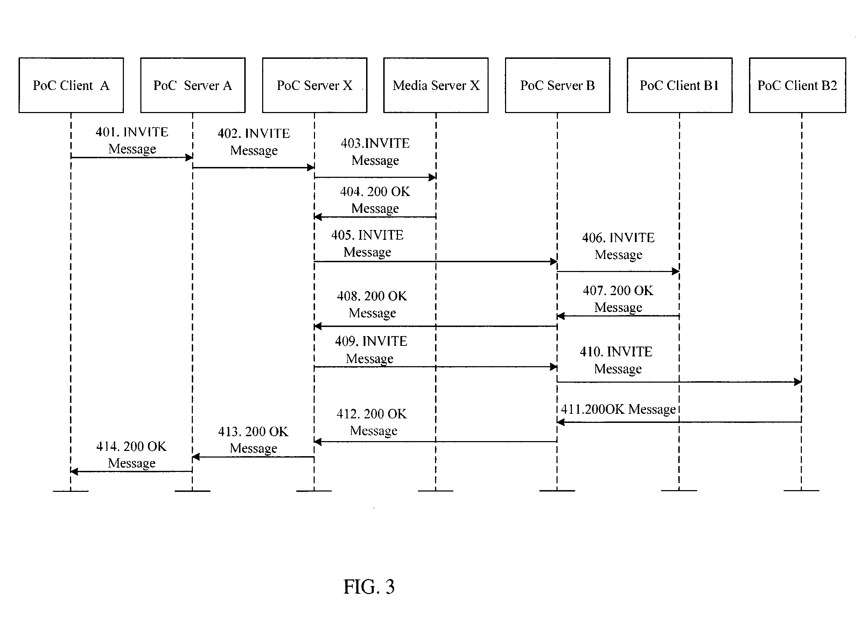

In the example as shown in FIG. 3, the detailed manner for a network entity that controls the session to determine whether the media server joins in the session or not is not explicitly explained. Any one of the above standards for making determination may be adopted.

s401: A PoC client A sends an INVITE (session establishing) request.

s402: A PoC server A where the PoC client A belongs to forwards the INVITE request to a PoC server X that controls the session.

s403: According to a service logic, the PoC server X determines to send a request to a media server X and negotiates to join the media server X in the session, and then sends the INVITE request to the media server X. As described above, the detailed content of the service logic may be obtained with reference to the above descriptions.

s404: The media server X accepts the INVITE request sent by the PoC server X, and returns a 200 OK response message.

s405: The PoC server X sends an INVITE request to a PoC server B where a PoC client B1 belongs to, so as to call the PoC client B1.

It should be particularly mentioned that, in this step, the PoC server X may send the

INVITE request message to the PoC server B where the PoC client B 1 belongs to after receiving the 200 OK response message returned by the media server X in s404, or it may send the INVITE request message before receiving the response message. When the former sending manner is adopted, if the media server fails to join in the PoC session, the PoC server X returns a failure response to the calling client PoC Client A, and the PoC server X does not send the INVITE request message to other PoC clients.

s406: The PoC server B sends the INVITE request to the PoC client B 1.

s407: The PoC client B1 accepts the INVITE request sent by the PoC server B, and returns a 200 OK response message.

s408: The PoC server B sends the 200 OK response message to the PoC server X, and at this time, the PoC client B1 successfully joins in the PoC session.

s409: The PoC server X sends the INVITE request to the PoC server B where a PoC client B2 belongs to, so as to call the PoC client B2.

s410: The PoC server B sends the INVITE request to the PoC client B2.

s411: The PoC client B2 accepts the INVITE request sent by the PoC server B, and returns a 200 OK response message.

s412: The PoC server B sends the 200 OK response message to the PoC server X, and at this time, the PoC client B2 successfully joins in the PoC session.

s413: The PoC server X sends the 200 OK response message to the PoC server A where the PoC client A belongs to, so as to initiate the PoC client A to successfully join in the PoC session.

It should be particularly mentioned that, the PoC server X may send the 200 OK response message to the PoC server A where the PoC client A belongs to immediately after the PoC server X receives the 200 OK message returned by the media server X, so as to indicate the successful establishment of the session. Alternatively, the PoC server X may send the 200 OK response message to the PoC server A after other PoC clients have successfully joined in the session.

s414: The PoC server A sends the 200 OK response message to the PoC client A, and at this time, the PoC client A successfully joins in the PoC session.

In the above processes, regarding the sequence for calling the clients, the PoC server that controls the session may wait for the success response returned from the specific device and then proceed to the procedures of joining other called clients, or directly call other clients without waiting for the success response from the specific device.

The successful establishment of the session may be determined based upon the following standards.

It is determined whether the session is successfully established or not based upon whether the server that controls the session receives the success response message returned by the media server or not, or other factors (e.g., number of success responses from the calling clients) that influence the successful establishment of the session, or both of the above.

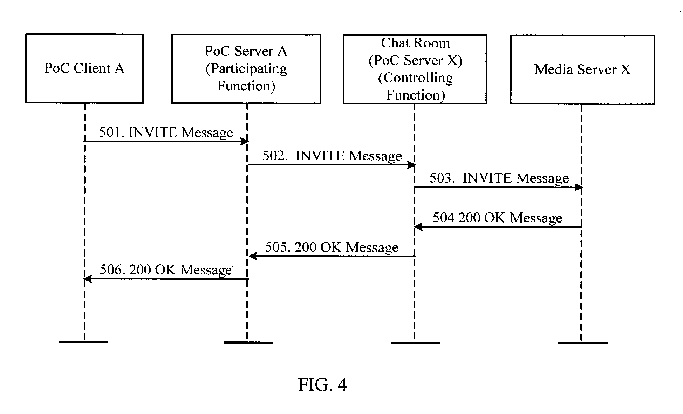

FIG. 4 illustrates a process for the server to determine whether the media server serving as the specific device joins in the session or not according to an application scenario of the session. In this scenario, the server provides a multimedia session service, e.g., chat session, and has a function of allowing the media server having specific functions to join in. Therefore, when receiving a session establishing request, the server may directly connect to the media server, and determine the usage of the media server.

s501: The PoC client A sends the INVITE (session establishing) request.

s502: The PoC server A where the PoC client A belongs to forwards the INVITE request to the PoC server X that controls the session.

s503: According to a type of the session server, the PoC server X determines to send a request to the media server X and negotiates to join the media server X in the session, and then sends the INVITE request to the media server X.

s504: The media server X accepts the INVITE request sent by the PoC server X, and returns the 200 OK response message.

s505: The PoC server determines that the session is successfully established, and returns the 200 OK response message to the client A.

In the above processes, regarding the sequence for calling the clients, the PoC server that controls the session may wait for the success response from the specific device and then proceed to the procedures of joining other called clients, or it may call other clients simultaneously while calling the specific device.

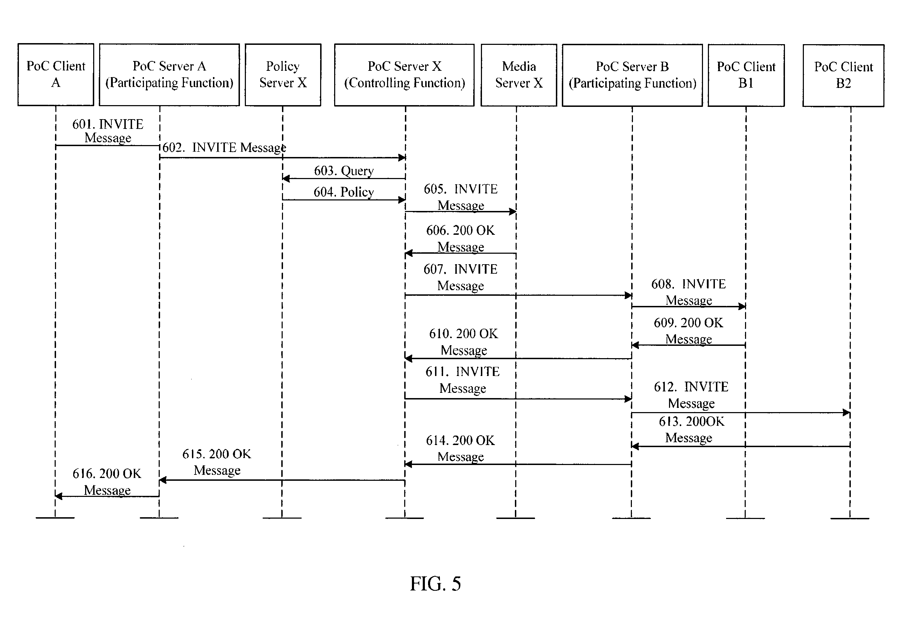

FIG. 5 illustrates the inventive process for the server as a network entity to query a joining policy of the specific device from a policy server that saves policies. In OMA architecture, the policy server that saves the joining policy of the specific device may be a group server that saves group data.

In s601: The PoC client A sends the INVITE (session establishing) request.

In s602: The PoC server A where the PoC client A belongs to forwards the INVITE request to the PoC server X that controls the session.

s603: According to the service logic, the PoC server X queries the policy server for the joining policy of the specific device (e.g., media server) to join in the session.

s604: The policy server receives a query request, and returns the joining policy of the specific device saved in the policy server to the PoC server X. The policy server may be the group server that saves group data. The joining policy of the specific device may be returned together with a group member list to the PoC server X in the process.

s605: The PoC server X sends the INVITE request to the media server.

s606: The media server X accepts the INVITE request sent by the PoC server X, and returns the 200 OK response message.

s607: The PoC server X sends the INVITE request to the PoC server B where the PoC client B1 belongs to, so as to call the PoC client B1.

It should be particularly mentioned that, in this step, the PoC server X may send the INVITE request message to the PoC server B where the PoC client B1 belongs to after receiving the 200 OK response message returned by the media server X in s606, or it may send the INVITE request message before receiving the response message. When the former sending manner is adopted, if the media server fails to join in the PoC session, the PoC server X returns a failure response to the calling client PoC Client A, and the PoC server X does not send the INVITE request message to other PoC clients.

s608: The PoC server B sends the INVITE request to the PoC client B 1.

s609: The PoC client B1 accepts the INVITE request sent by the PoC server B, and returns the 200 OK response message.

s610: The PoC server B sends the 200 OK response message to the PoC server X, and at this time, the PoC client B successfully joins in the PoC session.

s611: The PoC server X sends the INVITE request to the PoC server B where the PoC client B2 belongs to, so as to call the PoC client B2.

s612: The PoC server B sends the INVITE request to the PoC client B2.

In s613: The PoC client B2 accepts the INVITE request sent by the PoC server B, and returns the 200 OK response message.

s614: The PoC server B sends the 200 OK response message to the PoC server X, and at this time, the PoC client B2 successfully joins in the PoC session.

s615: The PoC server X sends the 200 OK response message to the PoC server A where the PoC client A belongs to, so as to initiate the PoC client A to successfully join in the PoC session.

It should be particularly mentioned that, the PoC server X may send the 200 OK response message to the PoC server A where the PoC client A belongs to immediately after the PoC server X receives the 200 OK message returned by the media server X, or it may send the 200 OK response message after other PoC clients have successfully joined in the session.

s616: The PoC server A sends the 200 OK response message to the PoC client A, and at this time, the PoC client A successfully joins in the PoC session.

In the above processes, regarding the sequence for calling the clients, the PoC server that controls the session may wait for the success response returned from the specific device and then proceed to the procedures of joining other called clients, or directly call other clients without waiting for the success response from the specific device.

In the OMA PoC application scenario, as well as other multimedia session scenarios, the specific device may have specific service functions, e.g., the media server provides a media service for a third party in the multimedia session, so that the process of granting the media server with the media transmission right may be involved.

Particularly, when the media server joins in the multimedia session during the establishment of the session, the server grants the media server with the media transmission right in the establishment stage. Alternatively, when the media server joins in the multimedia session after the session begins, the server grants the media server with the media transmission right.

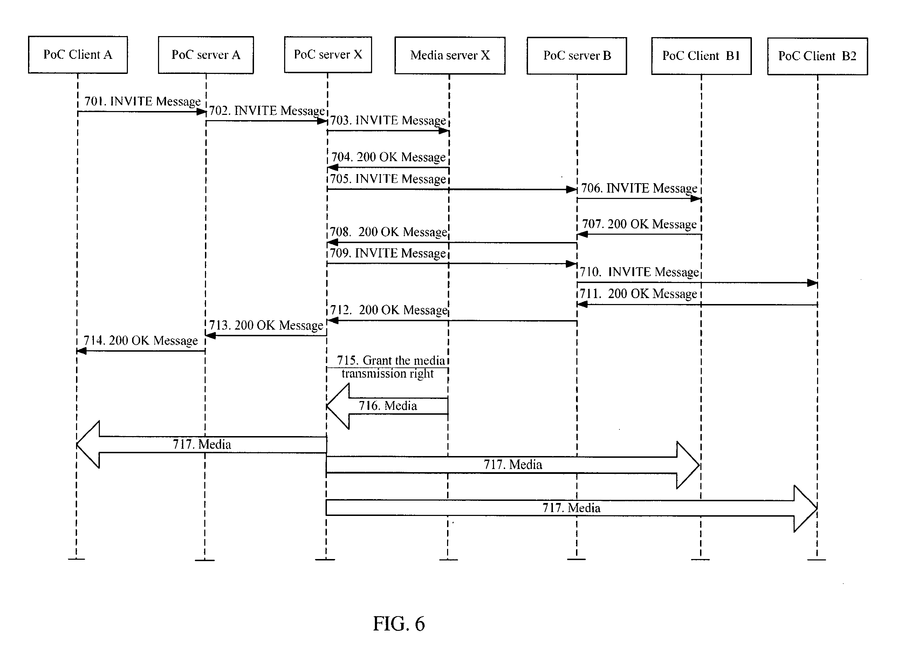

According to another example, the typical OMA PoC session is taken as an example for demonstrating a process that the media server obtains the media transmission right when joining in the multimedia session, as shown in FIG. 6, which includes:

s701: The PoC client A sends the INVITE (session establishing) request.

In this step, the PoC session with the specific media server joining in is required to be established, so the INVITE request message carries an indication about applying the media transmission right for the media server.

s702: The PoC server A where the PoC client A belongs to forwards the INVITE request to the PoC server X that controls the session.

s703: According to the service logic, the PoC server X determines to send a request to the media server X, and negotiates to join the media server X in the session, and sends the INVITE request to the media server X. The detailed content of the service logic may be obtained with reference to the above descriptions.

s704: The media server X accepts the INVITE request sent by the PoC server X, and returns the 200 OK response message.

s705: The PoC server X sends the INVITE request to the PoC server B where the PoC client B1 belongs to, so as to call the PoC client B1.

Similar to s405 in the above embodiment, the PoC server X may send the INVITE request message to the PoC server B where the PoC client B1 belongs to after receiving the 200 OK response message returned by the media server X, or it may send the INVITE request message before receiving the response message. When the former sending manner is adopted, if the media server fails to join in the PoC session, the PoC server X returns a failure response to the calling client PoC Client A, and the PoC server X does not send the INVITE request message to other PoC clients.

In s706-s712, similar to s406-s412 in the above embodiment, the PoC clients B1 and B2 accept the INVITE request and successfully join in the PoC session, which will not be repeatedly described herein.

s713: The PoC server X sends the 200 OK response message to the PoC server A where the PoC client A belongs to, so as to initiate the PoC client A to successfully join in the PoC session.

It should be particularly mentioned that, the PoC server X may send the 200 OK response message to the PoC server A where the PoC client A belongs to immediately after the PoC server X receives the 200 OK message returned by the media server, or it may send the 200 OK response message after other PoC clients have successfully joined in the session.

s714: The PoC server A sends the 200 OK response message to the PoC client A, and at this time, the PoC client A successfully joins in the PoC session.

s715: The PoC server X firstly grants the media server with the media transmission right according to the policy.

The media transmission right may be sent through a TB or MB Granted message specified in the OMA PoC service specification.

s716: After receiving the TB or MB Granted message, the media server obtains the media transmission right, and sends media to the PoC server X.

s717: The PoC server X forwards the media to other clients.

Because the media sent by the media server may be sent to the clients participating in the session, the PoC server X that controls the session may save the media sent by the media server X for a certain time period. When a client joins in session, the PoC server X firstly sends the saved media to the client. The media sent by the media server is prompt information for this session, e.g., a piece of voice, or video segment, etc.

In this process, the calling PoC client A may carry an indication about applying the media transmission right for the media server in the INVITE request message. Then, the PoC server X that controls the session sends a message of granting the media transmission right to the media server X. When the PoC server X that controls the session determines to join the media server in the session according to the service logic other than the request from the client, the client does not need to send a request to the network device, but the media transmission right is directly granted by the server that controls the session. For example, in the above embodiments, the PoC server X may directly grant the media transmission right to the media server X after the media server joins in the session.

During the implementation of the multimedia session, the media server is, for example, taken as a specific device, and when the media server joins in or leaves the session, specific notifications need to be sent to the clients in the session, for indicating the joining and leaving of the media server. The notification is made in the following detailed steps.

(1) The server uses a specific session attribute in the status information of the session to identify.

The adding or removing of the media server may be taken as specific session status information, and the status information that the media server joins in or leaves the session may be identified in the status information of the session by the specific session attribute. Therefore, when the media server joins in or leaves the session, the server modifies the status information of the multimedia session to identify the joining of the specific device, and notifies the client in the multimedia session of the status information.

(2) The server identifies the joining or leaving of the specific device in multimedia session participant information.

The media server may be regarded as an ordinary session participant. Identification information of the media server is added in the status information of ordinary session participants. When the media server joins in or leaves the session, the joining or leaving of the specific device is identified in the multimedia session participant information.

(3) The server stores the status information of the specific device in the relevant information of the multimedia session, so as to enable the client in the multimedia session to get to know the joining of the specific device through an information query mechanism, or notifies a client that subscribes the relevant information of the multimedia session of the joining of the specific device.

The relevant status information of the media server may be taken as relevant information of the group session and saved in the group server, which may be queried or notified by a supported group information query mechanism. If an OMA XMDS service engine is supported, after one session begins, other services of the OMA such as OMA PoC, OMA IM, and OMA CPM send the status information of the media server to the XDMS that saves the group information, and the XDM Client can query the group information from the XDMS that saves the group information.

(4) The server declares the status information of the specific device.

The relevant status information of the media server may also be taken as a part of the relevant information of the session, and the server declares the relevant information of the media server through a mechanism of the existing service.

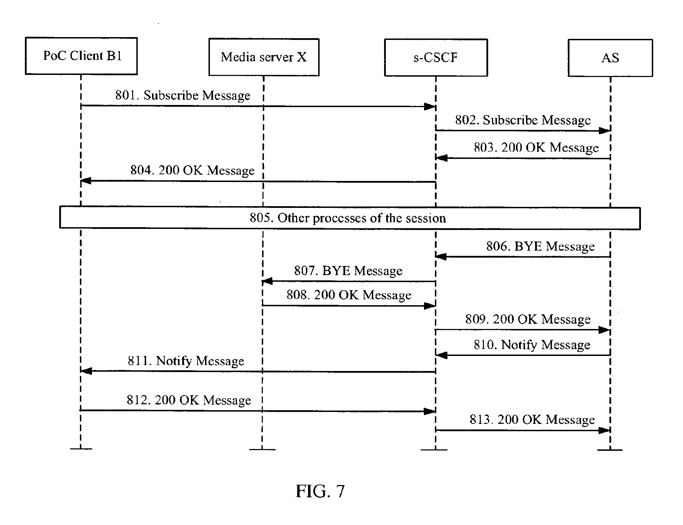

According to another example, the typical OMA PoC session is taken as an example for illustrating the process that the server notifies every client of the leaving of the media server when the media server is removed from the session. The server that controls the PoC session is, for example, an application server (AS), as shown in FIG. 7. The process includes:

s801-s802: The PoC client B1 subscribes from the AS the status information of the session that is controlled by the AS, which generally follows a SUBSCRIBE/NOTIFY mechanism of the SIP protocol, in which a subscription message, Subscribe request, is forwarded through a serving call session control function (S-CSCF) entity in an IMS network.

s803-s804: The AS accepts the subscription of the PoC client B1, and returns the 200 OK response message for the subscription message to the PoC client B1.

s805: Other application processes of the session are performed.

s806-s807: Due to certain reasons or triggering conditions, the AS sends a BYE request message to the media server, i.e. requests the media server to leave the current session.

s808-s809: After receiving the BYE request message sent by the AS, the media server returns the 200 OK response message, and then leaves this session.

s810-s811: After receiving the 200 OK response message, the AS sends a notify message (NOTIFY) to the PoC client B1 that subscribes the relevant status information of the media server, in which the status information carries relevant information that the media server leaves the session. The information is forwarded to the PoC client B1 via the S-CSCF.

s812-s813: The PoC client B1 returns the 200 OK response message for the NOTIFY message.

Through the method for managing the specific device in the multimedia session provided in the above examples, the methods for joining the specific device in a newly-established or existing multimedia session are provided, which perfect an authorization mechanism of the specific device in the multimedia session and a notification mechanism for the client, thereby realizing a unified management of the specific device in the multimedia session.

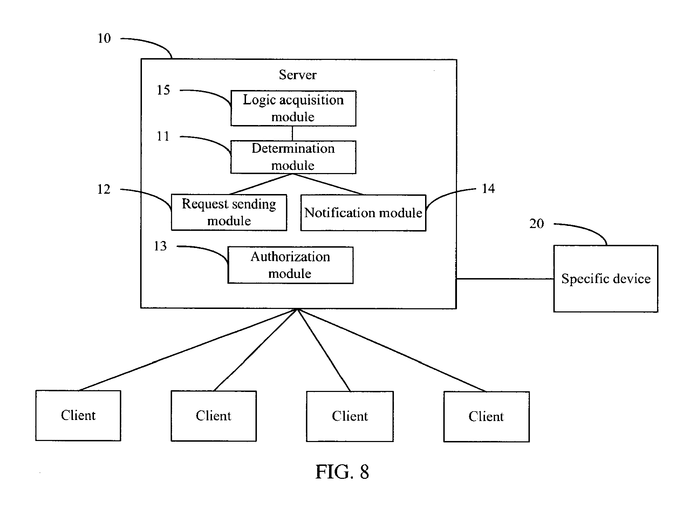

According to an embodiment of the present invention, a system for managing a specific device in a multimedia session, as shown in FIG. 8, includes a server 10 and a specific device 20.

The server 10 is adapted to send a request message to the specific device 20 when determining that the specific device 20 is required to join in the newly-established or existing multimedia session.

The specific device 20 joins in the multimedia session after receiving the request message sent by the server 10. The specific device may be a media server, an IVR server, and a third-party server.

Particularly, the server 10 further includes a determination module 11, a request sending module 12, and an authorization module 13.

The determination module 11 is adapted to determine whether the multimedia session requires the specific device to join in or leave.

The request sending module 12 is adapted to send a notify message to the specific device 20 when the determination module 11 determines that the multimedia session requires the specific device 20 to join in or leave.

The authorization module 13 is adapted to authorize the specific device 20 joining in the multimedia session.

Further, the server 10 further includes a notification module 14 and a logic acquisition module 15.

The notification module 14 is adapted to notify the client in the multimedia session when the determination module 11 determines that the multimedia session requires the specific device to join in or leave. The notification may be made through the following manners. (1) The server modifies the status information of the multimedia session, so as to identify the joining of the specific device, and notifies the client in the multimedia session of the status information. Alternatively, (2) the server identifies the joining of the specific device in the multimedia session participant information, or stores the status information of the specific device in relevant information of the multimedia session, so as to enable the client in the multimedia session to get to know the joining of the specific device through information query mechanism. Alternatively, (3) the server stores the status information of the specific device in the relevant information of the multimedia session, and notifies a client that subscribes the relevant information of the multimedia session of the joining of the specific device. Alternatively, (4) the server declares the status information of the specific device.

The logic acquisition module 15 is adapted to acquire service logic relevant to the multimedia session and notify the determination module 11 of the service logic to serve as a basis for determining whether the multimedia session requires the specific device to join in or leave. In detail, it is determined whether the multimedia session under establishment or the established multimedia session requires the specific device to join in or not based upon the following standards. (1) The determination may be made based upon a request sent by the client. (2) The determination may be made based upon service parameters used in the multimedia session. (3) The determination may be made based upon an attribute or type of the multimedia session. (4) The determination may be made based upon a policy preset at a network. In detail, it is determined whether the multimedia session requires the specific device to leave or not based upon the following standards. (1) A request for leaving the multimedia session sent by the specific device is received. (2) The server 10 initiates a process of removing the specific device from the multimedia session. (3) The server 10 receives a request for removing the specific device from the multimedia session sent by the client in the multimedia session.

According to an embodiment, the present invention provides a server in a multimedia session, which includes a determination module and a transceiver module. The determination module is adapted to send a request message to the specific device through the transceiver module when determining that the multimedia session requires the specific device to join in, and join the specific device in the multimedia session when the transceiver module receives a response returned by the specific device.

The server in the multimedia session in this embodiment may also include a logic acquisition module and an authorization module. The logic acquisition module is adapted to acquire service logic relevant to the multimedia session and notify the determination module of the service logic to serve as a basis for determining whether the multimedia session requires the specific device to join in or leave. The service logic includes one or more selected from a group consisting of a client request, a type of the multimedia session, a parameter, or a preset policy. The authorization module is adapted to authorize the specific device joining in the multimedia session.

The determination module in this embodiment is also adapted to send a leave message to the specific device through the transceiver module when determining that the specific device is required to be removed from the multimedia session, and remove the specific device from the multimedia session.

Furthermore, the server in this embodiment may also include a notification module adapted to notify the client in the multimedia session through the transceiver module when the specific device joins in or leaves the multimedia session.

According to another embodiment, the present invention further provides a server in a multimedia session, which includes a determination module, a request sending module, and an authorization module. The determination module is adapted to determine whether the multimedia session requires the specific device to join in or leave. The request sending module is adapted to send a notify message to the specific device when the determination module determines that the multimedia session requires the specific device to join in or leave. The authorization module is adapted to authorize a terminal device joining in the multimedia session.

Furthermore, the server in this embodiment may also include a notification module and/or a logic acquisition module. The notification module is adapted to notify the client in the multimedia session when the specific device joins in or leaves the multimedia session. The logic acquisition module is adapted to acquire service logic relevant to the multimedia session and notify the determination module of the service logic to serve as a basis for determining whether the multimedia session requires the specific device to join in or leave. The service logic includes one or more selected from a group consisting of a client request, a type of the multimedia session, a parameter of the multimedia session, or a preset policy of the multimedia session.

Through the system and device for managing the specific device in the multimedia session provided in the above embodiments, the methods for joining the specific device in the multimedia session under establishment or established multimedia session are provided, so as to provide an authorization mechanism for the specific device in the multimedia session and a notification mechanism for the client, thereby achieving a unified management of the specific device in the multimedia session.

Further, a method for managing a specific device in a multimedia session is provided. In this method, the server obtains services offered by the specific device directly through an interface between the server and the specific device, instead of granting the media transmission right. As described above, the specific device may be a media storage or transmission server, an IVR device, or a third-party server, etc.

An interface protocol between the server and the specific device may be an RTSP protocol, an HTTP protocol, or an FTP protocol, etc.

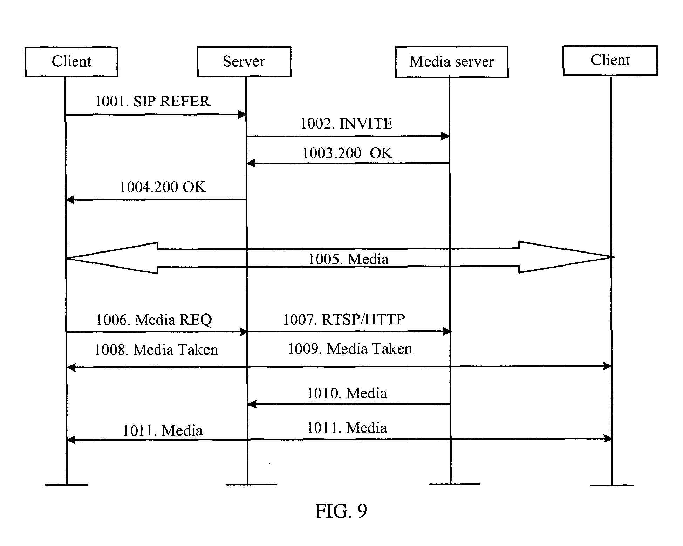

FIG. 9 shows a method for managing a specific device in a multimedia session. In this scenario, the specific device is a media server, and the server first invites the specific device to join in the multimedia session before obtaining services offered by the specific device.

s1001: The client sends a request for joining the specific device in the multimedia session, in which the joining request adopts an SIP REFER request message. Definitely, the joining request may also adopt the SIP INVITE request message. The joining request message carries a service indication for requiring the server to add the media server.

s1002: After receiving the joining request sent by the client, the server sends a session invitation request message to the media server, in which the SIP INVITE request message may be adopted.

s1003: After receiving the session invitation request message, the media server returns the 200 OK response message. Then, the server receives the 200 OK response message returned by media server, in other words, the media server joins in the multimedia session.

According to the service logic of a multi-party session, the server may send a notify message that the media server joins in the multimedia session to a part of or all the clients in the multimedia session. For example, the SUBSCRIBE/NOTIFY mechanism may be adopted to send the SIP NOTIFY message to notify the clients.

s1004: After receiving the 200 OK response message, the server returns the 200 OK response message to the client to notify that the media server joining request requested by the client has been performed.

s1005: The media are transmitted through the normal process in the multimedia session.

s1006: A client requests the media resources available on the media server, and the client sends a media sending request to the server in order to acquire the media on the media server. In FIG. 9, the client that requests the media on the media server is the client that requests the media server to join in the session. In detailed applications, the client that requests the media on the media server may be other client in the session, as long as the client knows that the media server has joined in the multimedia session.

s1007: The server receives the media sending request sent by the client and then acquires the media directly through the interface protocol between the server and the media server, and the interface there-between makes communications through the corresponding protocol. For example, when the HTTP protocol is adopted for making communications, an HTTP GET message may be adopted to acquire the media. Definitely, the media may be acquired through the RTSP protocol or other protocols.

s1008-s1009: The server may send an indication about the media transmission right to the client in the session, so as to notify the client in the session that the current media transmission right and media sending resources are currently used by the media sent by the media server.

s1010: The media server sends the media to the server through an interface between the media server and the session server.

s1011: After acquiring the media from the media server, the server sends the media to the client in the multimedia session.

In this way, the server in the session, e.g., control server, acquires the media through the interface protocol between the server and the media server, and provides the media to the clients in the multi-party session.

It should be particularly mentioned that, because of the RTSP protocol as the interface protocol between the server and the specific device supports a control function for the specific device, when this protocol is adopted as the interface protocol, the application scope between the client and the server may be expanded. For example, the client may request the session server to control the media resources on the specific device, e.g., play, pause, forward, backward, etc. If other protocols that support the control functions of the specific device are adopted as the interface protocol, similar expansions may also be achieved.

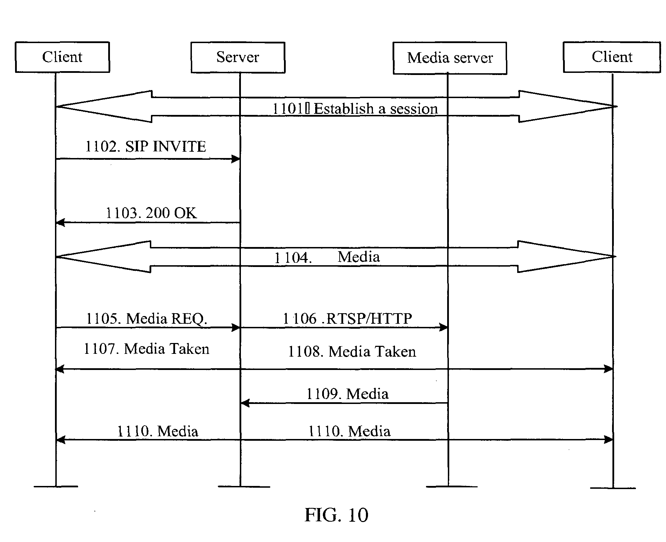

According to yet another example, FIG 10 shows a method for managing a specific device in a multimedia session. In this scenario, the specific device is a media server, and the server directly acquires the media from the specific device, without inviting the specific device to join in the multimedia session in advance.

s1101: The multimedia session is established.

s1102: The client sends a request for joining the specific device in the multimedia session. The request may adopt the SIP INVITE request message. The joining request message includes a link of the media server, such as a URI or another link address of the media server.

s1103: After receiving the joining request sent by the client, the server sends an INVITE request response to the client.

s1104: The media are transmitted through the normal process in the multi-party session.

s1105: The client requests the media resources available on the media server, and the client sends the media sending request to the server in order to acquire the media on the media server.

s1106: After receiving the media sending request sent by the client, the server directly acquires the media through the interface between the server and the media server. The interface makes communications through the corresponding protocol. For example, when the HTTP protocol is used for making communications, the HTTP GET message may be adopted to acquire the media. Definitely, the media may also be acquired through the RTSP protocol or other protocols.

s1107-s1108: The server may send an indication about the media transmission right to the client in the session, so as to notify the client in the session that the current media transmission right and media sending resources are used by the media sent by the media server.

s1109: The media server sends the media to the server through the interface protocol between the media server and the server.

s1110: The server acquires the media from the media server, and sends the media to the client in the session.

In this way, the server in the session, e.g., control server, acquires the media through the interface between the server and the media server, and provides the media to the clients in the multi-party session.

In view of the above, the present invention provides a method for joining the specific device in a newly-established or existing multimedia session, so as to provide an authorization mechanism of the specific device in the multimedia session and a notification mechanism for the client, thereby realizing a unified management of the specific device in the multimedia session.

Through the above descriptions of the implementation manners, those skilled in the art can clearly understand that, the present invention is realized through combining software with a necessary universal hardware platform, which definitely can be realized through hardware, but in most cases, the former manner is preferred. Based on such understanding, the technical solutions of the present invention or parts of the technical solutions of the present invention making contributions to the prior art are substantially presented in the form of a software product. The obtained software product is stored in a storage medium, which includes a plurality of instructions for enabling network equipment to execute the methods according to the embodiments of the present invention.

The above embodiments are merely intended to describe the technical solutions of the present invention, but not to limit the scope of present invention. It will be apparent to those skilled in the art that various modifications and variations can be made to the structure of the present invention without departing from the scope of the invention as defined by the claims.

## Claims

1. A method for joining a specific device in a multimedia session comprising:
determining (201, 503), by a server, whether the specific device is required to join in the multimedia session or not, wherein the specific device is for assisting the implementation of the multimedia session;
sending (202, 503), by the server, a request message to the specific device if the specific device is required to join in;
joining (203, 504), by the server, the specific device in the multimedia session in response to a response received from the specific device; and
obtaining (1007), by the server, services offered by the specific device through an interface between the specific device and the server; **characterised in that** the interface performs communications through an RTSP protocol, an HTTP protocol or an FTP protocol; and
the step of determining (201, 503), by the server, whether the specific device is required to join in the multimedia session comprises: querying a policy server for the joining policy of the specific device to join in the session.

2. The method according to claim 1, wherein the multimedia session is a newly-established multimedia session and the method further comprises: in response to the request message sent by the server to the specific device or the response obtained by the sever from the specific device;
sending (801, 802), by the server, a request message to a client relevant to the multimedia session.

3. The method according to claim 1, wherein after joining, by the server, the specific device in the multimedia session, the method further comprises:
notifying (205), by the server, a client in the multimedia session that the specific device has joined in the multimedia session.

4. The method according to claim 3, wherein the process of notifying, by the server, a client in the multimedia session, comprises one or more kinds of following manners:
modifying, by the server, status information of the multimedia session to identify the joining of the specific device, and notifying the client in the multimedia session of the status information;
identifying, by the server, the joining of the specific device in multimedia session participant information;
storing, by the server, the status information of the specific device in relevant information of the multimedia session for the client in the multimedia session to get to know the joining of the specific device by a information query mechanism;
storing, by the server, the status information of the specific device in the relevant information of the multimedia session, and notifying a client that subscribes the relevant information of the multimedia session of the joining of the specific device; and
declaring, by the server, the status information about the joining of the specific device.

5. The method according to claim 1, wherein after joining, by the server, the specific device in the multimedia session, the method further comprises:
receiving (203), by the server, a message that the specific device joins in the multimedia session; and
authorizing (204), by the server, the specific device; wherein the process of authorizing, by the server, the specific device further comprises:
authorizing (205), by the server, the specific device according to a request sent by a client or a preset policy immediately after the specific device joins in the multimedia session.

6. The method according to claim 1, wherein after joining, by the server, the specific device in the multimedia session, the method further comprises:
determining (206), by the server, that the specific device in the multimedia session is required to be removed;
sending (206), by the server, a leave message to the specific device; and
removing (207), by the server, the specific device from the multimedia session.

7. The method according to claim 6, wherein a basis of determining, by the server, that the specific device in the multimedia session is required to be removed comprises one or more kinds of following manners:
receiving, by the server, a request for leaving the multimedia session sent by the specific device;
initiating, by the server, to remove the specific device from the multimedia session; and
receiving, by the server, a request for removing the specific device from the multimedia session sent by a client in the multimedia session.

8. The method according to claim 6 or 7, wherein after removing, by the server, the specific device from the multimedia session, the method further comprises:
notifying (208), by the server, the client in the multimedia session that the specific device has left the multimedia session;
wherein the process of notifying, by the server, the client in the multimedia session comprises one or more kinds of following manners:
modifying, by the server, status information of the multimedia session to identify the leaving of the specific device, and notifying the client in the multimedia session of the status information;
identifying, by the server, the leaving of the specific device in multimedia session participant information;
storing, by the server, the status information of the specific device in relevant information of the multimedia session for the client in the multimedia session to get to know the leaving of the specific device by a information query mechanism;
storing, by the server, the status information of the specific device in the relevant information of the multimedia session, and notifying a client that subscribes the relevant information of the multimedia session of the leaving of the specific device; and
declaring, by the server, the status information about the leaving of the specific device.

9. A server in a multimedia session comprising: a determination module and a transceiver module,
wherein the determination module is adapted to send a request message to a specific device through the transceiver module when determining that the specific device is required to join in the multimedia session, wherein the specific device is for assisting the implementation of the multimedia session, join the specific device in the multimedia session when the transceiver module obtains a response returned by the specific device, and obtain services offered by the specific device through an interface between the specific device and the server; **characterised in that** the interface performs communications through an RTSP protocol, an HTTP protocol or an FTP protocol; and
the server is adapted to determine whether the specific device is required to join in the multimedia session by querying a policy server for the joining policy of the specific device to join in the session.

10. The server according to claim 9, wherein:
the determination module is further adapted to send a leave message to the specific device through the transceiver module when determining that the specific device is required to be removed from the multimedia session, and remove the specific device from the multimedia session.

11. The server according to claim 9 or 10, further comprising:
a notification module, adapted to notify a client in the multimedia session through the transceiver module when the specific device joins in or leaves the multimedia session.

12. A system for managing a specific device in a multimedia session, comprising a sever according to any one of claims 9 to 11.

## Patentansprüche

1. Verfahren zum Beitreten einer spezifischen Vorrichtung zu einer Multimediasitzung, das Folgendes umfasst:
Bestimmen (201, 503) durch einen Server, ob es erforderlich ist, dass die spezifische Vorrichtung der Multimediasitzung beitritt oder nicht, wobei die spezifische Vorrichtung dem Unterstützen der Implementierung der Multimediasitzung dient;
Senden (202, 503) einer Anforderungsnachricht durch den Server zu der spezifischen Vorrichtung, falls es erforderlich ist, dass die spezifische Vorrichtung beitritt;
Hinzufügen (203, 504) der spezifischen Vorrichtung durch den Server zu der Multimediasitzung in Reaktion auf eine von der spezifischen Vorrichtung empfangenen Antwort; und
Erhalten (1007) von Diensten, die durch die spezifische Vorrichtung angeboten werden, durch den Server über eine Schnittstelle zwischen der spezifischen Vorrichtung und dem Server; **dadurch gekennzeichnet, dass** die Schnittstelle Kommunikation über ein RTSP-Protokoll, ein HTTP-Protokoll oder ein FTP-Protokoll ausführt; und
der Schritt des Bestimmens (201, 503) durch den Server, ob es erforderlich ist, dass die spezifische Vorrichtung der Multimediasitzung beitritt, Folgendes umfasst: Abfragen eines Strategieservers nach der Beitrittsstrategie der spezifischen Vorrichtung zum Beitreten zu der Sitzung.

2. Verfahren nach Anspruch 1, wobei die Multimediasitzung eine neu aufgebaute Multimediasitzung ist und das Verfahren ferner Folgendes umfasst: in Reaktion auf die durch den Server zu der spezifischen Vorrichtung gesendete Anforderungsnachricht oder die durch den Server von der spezifischen Vorrichtung erhaltene Antwort;
Senden (801, 802) einer Anforderungsnachricht durch den Server zu einem Client, der für die Multimediasitzung relevant ist.

3. Verfahren nach Anspruch 1, wobei nach dem Hinzufügen der spezifischen Vorrichtung zu der Multimediasitzung durch den Server das Verfahren ferner Folgendes umfasst:
Melden (205) durch den Server an einen Client in der Multimediasitzung, dass die spezifische Vorrichtung der Multimediasitzung beigetreten ist.

4. Verfahren nach Anspruch 3, wobei der Prozess des Meldens durch den Server an einen Client in der Multimediasitzung eine oder mehrere Arten der folgenden Weisen umfasst:
Modifizieren von Zustandsinformationen der Multimediasitzung durch den Server,
um das Beitreten der spezifischen Vorrichtung zu identifizieren, und Melden der Zustandsinformationen an den Client in der Multimediasitzung;
Identifizieren des Beitretens der spezifischen Vorrichtung durch den Server in Multimediasitzungsteilnehmerinformationen;
Speichern der Zustandsinformationen der spezifischen Vorrichtung in relevanten Informationen der Multimediasitzung durch den Server, damit der Client in der Multimediasitzung den Beitritt der spezifischen Vorrichtung durch einen Informationsabfragemechanismus erfährt;
Speichern der Zustandsinformationen der spezifischen Vorrichtung in den relevanten Informationen der Multimediasitzung durch den Server und Melden des Beitritts der spezifischen Vorrichtung an einen Client, der die relevanten Informationen der Multimediasitzung abonniert hat; und
Deklarieren der Zustandsinformationen über den Beitritt der spezifischen Vorrichtung durch den Server.

5. Verfahren nach Anspruch 1, wobei das Verfahren nach dem Hinzufügen der spezifischen Vorrichtung zu der Multimediasitzung durch den Server ferner Folgendes umfasst:
Empfangen (203) einer Nachricht durch den Server, dass die spezifische Vorrichtung der Multimediasitzung beitritt; und
Zulassen (204) der spezifischen Vorrichtung durch den Server; wobei der Prozess des Zulassens der spezifischen Vorrichtung durch den Server ferner Folgendes umfasst: Zulassen (205) der spezifischen Vorrichtung durch den Server gemäß einer durch einen Client gesendeten Anforderung oder einer voreingestellten Strategie unmittelbar nachdem die spezifische Vorrichtung der Multimediasitzung beitritt.

6. Verfahren nach Anspruch 1, wobei das Verfahren nach dem Hinzufügen der spezifischen Vorrichtung zu der Multimediasitzung durch den Server ferner Folgendes umfasst:
Bestimmen (206) durch den Server, dass es erforderlich ist, dass die spezifische Vorrichtung in der Multimediasitzung entfernt wird;
Senden (206) einer Austrittsnachricht durch den Server zu der spezifischen Vorrichtung; und
Entfernen (207) der spezifischen Vorrichtung durch den Server aus der Multimediasitzung.

7. Verfahren nach Anspruch 6, wobei eine Basis des Bestimmens durch den Server, dass es erforderlich ist, dass die spezifische Vorrichtung aus der Multimediasitzung entfernt wird, eine oder mehrere Arten der folgenden Weisen umfasst:
Empfangen einer durch die spezifische Vorrichtung gesendeten Anforderung zum Verlassen der Multimediasitzung durch den Server;
Einleiten durch den Server, die spezifische Vorrichtung aus der Multimediasitzung zu entfernen; und
Empfangen durch den Server einer durch einen Client in der Multimediasitzung gesendeten Anforderung zum Entfernen der spezifischen Vorrichtung aus der Multimediasitzung;

8. Verfahren nach Anspruch 6 oder 7, wobei das Verfahren nach dem Entfernen der spezifischen Vorrichtung aus der Multimediasitzung durch den Server ferner Folgendes umfasst:
Melden (208) durch den Server an den Client in der Multimediasitzung, dass die spezifische Vorrichtung die Multimediasitzung verlassen hat;
wobei der Prozess des Meldens durch den Server an den Client in der Multimediasitzung eine oder mehrere Arten der folgenden Weisen umfasst:
Modifizieren von Zustandsinformationen der Multimediasitzung durch den Server,
um das Austreten der spezifischen Vorrichtung zu identifizieren, und Melden der Zustandsinformationen an den Client in der Multimediasitzung;
Identifizieren des Austretens der spezifischen Vorrichtung in Multimediasitzungsteilnehmerinformationen durch den Server;
Speichern der Zustandsinformationen der spezifischen Vorrichtung in relevanten Informationen der Multimediasitzung durch den Server, damit der Client in der Multimediasitzung den Austritt der spezifischen Vorrichtung durch einen Informationsabfragemechanismus erfährt;
Speichern der Zustandsinformationen der spezifischen Vorrichtung in den relevanten Informationen der Multimediasitzung durch den Server und Melden des Austritts der spezifischen Vorrichtung an einen Client, der die relevanten Informationen der Multimediasitzung abonniert hat; und
Deklarieren der Zustandsinformationen über den Austritt der spezifischen Vorrichtung durch den Server.

9. Server in einer Multimediasitzung, der Folgendes umfasst: ein Bestimmungsmodul und ein Sender/Empfänger-Modul,
wobei das Bestimmungsmodul ausgelegt ist, eine Anforderungsnachricht durch das Sender/Empfänger-Modul zu einer spezifischen Vorrichtung zu senden, wenn es bestimmt, dass es erforderlich ist, dass die spezifische Vorrichtung der Multimediasitzung beitritt, wobei die spezifische Vorrichtung dazu dient, die Implementierung der Multimediasitzung zu unterstützen, die spezifische Vorrichtung der Multimediasitzung hinzuzufügen, wenn das Sender/Empfänger-Modul eine durch die spezifische Vorrichtung zurückgegebene Antwort erhält, und Dienste, die durch die spezifische Vorrichtung angeboten werden, über eine Schnittstelle zwischen der spezifischen Vorrichtung und dem Server zu erhalten; **dadurch gekennzeichnet, dass** die Schnittstelle Kommunikation über ein RTSP-Protokoll, ein HTTP-Protokoll oder ein FTP-Protokoll ausführt; und
der Server ausgelegt ist, durch Abfragen eines Strategieservers nach der Beitrittsstrategie der spezifischen Vorrichtung zum Beitreten zu der Sitzung zu bestimmen, ob es erforderlich ist, dass die spezifische Vorrichtung der Multimediasitzung beitritt.

10. Server nach Anspruch 9, wobei:
das Bestimmungsmodul ferner ausgelegt ist, eine Austrittsnachricht zu der spezifischen Vorrichtung durch das Sender/Empfänger-Modul zu senden, wenn es bestimmt, dass es erforderlich ist, dass die spezifische Vorrichtung aus der Multimediasitzung entfernt wird, und die spezifische Vorrichtung aus der Multimediasitzung zu entfernen.

11. Server nach Anspruch 9 oder 10, der ferner Folgendes umfasst:
ein Meldungsmodul, das ausgelegt ist, einem Client in der Multimediasitzung durch das Sender/Empfänger-Modul zu melden, wenn die spezifische Vorrichtung der Multimediasitzung beitritt oder sie verlässt.

12. System zum Managen einer spezifischen Vorrichtung in einer Multimediasitzung, das einen Server nach einem der Ansprüche 9 bis 11 umfasst.

## Revendications

1. Procédé pour faire entrer un dispositif spécifique dans une session multimédia, le procédé comprenant les étapes consistant à :
déterminer (201, 503), par un serveur, si le dispositif spécifique doit ou non entrer dans la session multimédia, le dispositif spécifique servant à faciliter la mise en oeuvre de la session multimédia ;
envoyer (202, 503), par le serveur, un message de demande au dispositif spécifique si le dispositif spécifique doit entrer ;
faire entrer (203, 504), par le serveur, le dispositif spécifique dans la session multimédia en réponse à une réponse reçue du dispositif spécifique ; et
obtenir (1007), par le serveur, des services offerts par le dispositif spécifique au moyen d'une interface entre le dispositif spécifique et le serveur ; **caractérisé en ce que** l'interface assure des communications au moyen d'un protocole RTSP, d'un protocole HTTP ou d'un protocole FTP ; et
l'étape consistant à déterminer (201, 503), par le serveur, si le dispositif spécifique doit entrer dans la session multimédia comprend l'étape consistant à : rechercher dans un serveur de politiques la politique d'entrée du dispositif spécifique pour entrer dans la session.

2. Procédé selon la revendication 1, dans lequel la session multimédia est une session multimédia nouvellement établie, le procédé comprenant en outre, en réponse au message de demande envoyé par le serveur au dispositif spécifique ou à la réponse obtenue par le serveur en provenance du dispositif spécifique, l'étape consistant à :
envoyer (801, 802), par le serveur, un message de demande à un client pertinent pour la session multimédia.

3. Procédé selon la revendication 1, comprenant en outre, après l'étape consistant à faire entrer, par le serveur, le dispositif spécifique dans la session multimédia, l'étape consistant à :
notifier (205), par le serveur, à un client dans la session multimédia que le dispositif spécifique est entré dans la session multimédia.

4. Procédé selon la revendication 3, dans lequel l'étape consistant à notifier, par le serveur, à un client dans la session multimédia s'effectue selon au moins une des étapes consistant à :
modifier, par le serveur, des informations d'état de la session multimédia pour identifier l'entrée du dispositif spécifique, et notifier au client dans la session multimédia les informations d'état ;
identifier, par le serveur, l'entrée du dispositif spécifique dans des informations sur les participants à la session multimédia ;
stocker, par le serveur, les informations d'état du dispositif spécifique dans des informations pertinentes sur la session multimédia pour porter à la connaissance du client dans la session multimédia l'entrée du dispositif spécifique au moyen d'un mécanisme de recherche d'informations ;
stocker, par le serveur, les informations d'état du dispositif spécifique dans les informations pertinentes sur la session multimédia, et notifier à un client qui s'abonne aux informations pertinentes sur la session multimédia l'entrée du dispositif spécifique ; et
annoncer, par le serveur, les informations d'état concernant l'entrée du dispositif spécifique.

5. Procédé selon la revendication 1, comprenant en outre, après l'étape consistant à faire entrer, par le serveur, le dispositif spécifique dans la session multimédia, les étapes consistant à :
recevoir (203), par le serveur, un message indiquant que le dispositif spécifique entre dans la session multimédia ; et
autoriser (204), par le serveur, le dispositif spécifique ; l'étape consistant à autoriser,
par le serveur, le dispositif spécifique comprenant en outre l'étape consistant à :
autoriser (205), par le serveur, le dispositif spécifique sur la base d'une demande envoyée par un client ou d'une politique prédéfinie immédiatement après l'entrée du dispositif spécifique dans la session multimédia.

6. Procédé selon la revendication 1, comprenant en outre, après l'étape consistant à faire entrer, par le serveur, le dispositif spécifique dans la session multimédia, les étapes consistant à :
déterminer (206), par le serveur, que le dispositif spécifique dans la session multimédia doit être retiré ;
envoyer (206), par le serveur, un message de sortie au dispositif spécifique ; et
retirer (207), par le serveur, le dispositif spécifique de la session multimédia.

7. Procédé selon la revendication 6, dans lequel l'étape consistant à déterminer, par le serveur, que le dispositif spécifique dans la session multimédia doit être retiré se base sur au moins un des événements suivants :
la réception, par le serveur, d'une demande de sortie de la session multimédia envoyée par le dispositif spécifique ;
l'engagement, par le serveur, du retrait du dispositif spécifique de la session multimédia ; et
la réception, par le serveur, d'une demande de retrait du dispositif spécifique de la session multimédia envoyée par un client dans la session multimédia.

8. Procédé selon la revendication 6 ou 7, comprenant en outre, après l'étape consistant à retirer, par le serveur, le dispositif spécifique de la session multimédia, l'étape consistant à :
notifier (208), par le serveur, au client dans la session multimédia que le dispositif spécifique est sorti de la session multimédia ;
l'étape consistant à notifier, par le serveur, au client dans la session multimédia s'effectue selon au moins une des étapes consistant à :
modifier, par le serveur, des informations d'état de la session multimédia pour identifier la sortie du dispositif spécifique, et notifier au client dans la session multimédia les informations d'état ;
identifier, par le serveur, la sortie du dispositif spécifique dans des informations sur les participants à la session multimédia ;
stocker, par le serveur, les informations d'état du dispositif spécifique dans des informations pertinentes sur la session multimédia pour porter à la connaissance du client dans la session multimédia la sortie du dispositif spécifique au moyen d'un mécanisme de recherche d'informations ;
stocker, par le serveur, les informations d'état du dispositif spécifique dans les informations pertinentes sur la session multimédia, et notifier à un client qui s'abonne aux informations pertinentes sur la session multimédia la sortie du dispositif spécifique ; et
annoncer, par le serveur, les informations d'état concernant la sortie du dispositif spécifique.

9. Serveur dans une session multimédia, le serveur comprenant : un module de détermination et un module émetteur-récepteur,
le module de détermination étant adapté à envoyer un message de demande à un dispositif spécifique au moyen du module émetteur-récepteur s'il détermine que le dispositif spécifique doit entrer dans la session multimédia, le dispositif spécifique servant à faciliter la mise en oeuvre de la session multimédia, faire entrer le dispositif spécifique dans la session multimédia si le module émetteur-récepteur obtient une réponse renvoyée par le dispositif spécifique, et obtenir des services offerts par le dispositif spécifique au moyen d'une interface entre le dispositif spécifique et le serveur ; **caractérisé en ce que** l'interface assure des communications par l'intermédiaire d'un protocole RTSP, d'un protocole HTTP ou d'un protocole FTP ;
et
le serveur est adapté à déterminer si le dispositif spécifique doit entrer dans la session multimédia en recherchant dans un serveur de politiques la politique d'entrée du dispositif spécifique pour entrer dans la session.

10. Serveur selon la revendication 9, dans lequel :
le module de détermination est en outre adapté à envoyer un message de sortie au dispositif spécifique au moyen du module émetteur-récepteur s'il détermine que le dispositif spécifique doit être retiré de la session multimédia, et retirer le dispositif spécifique de la session multimédia.

11. Serveur selon la revendication 9 ou 10, comprenant en outre :
un module de notification, adapté à notifier à un client dans la session multimédia au moyen du module émetteur-récepteur lorsque le dispositif spécifique entre dans la session multimédia ou en sort.

12. Système pour gérer un dispositif spécifique dans une session multimédia, comprenant un serveur selon l'une quelconque des revendications 9 à 11.
